# EUROPÄISCHE PATENTSCHRIFT

(11) **EP 0 820 835 B1**
(45) Veröffentlichungstag und Bekanntmachung des Hinweises auf die Patenterteilung: **28.02.2001**
(21) Anmeldenummer: 97112624.8
(22) Anmeldetag: 23.07.1997
(51) Int. Cl.: B23Q 7/00, B23Q 11/00, B23Q 7/14

(54) **Bearbeitungszentrum**
Machining centre
Centre d'usinage

(30) Priorität: 26.07.1996 DE 19630091; 27.12.1996 DE 19654536
(43) Veröffentlichungstag der Anmeldung: 28.01.1998
(73) Patentinhaber: GROB-Werke Dr. h.c. mult. Dipl.-Ing. Burkhart Grob e.K., 87719 Mindelheim (DE)
(72) Erfinder: REHM, KARL DIPL. ING, D-87719 Mindelheim (DE)
(74) Vertreter: Pfister, Helmut, Dipl.-Ing.

(56) Entgegenhaltungen:
- EP-A- 0 484 556
- DE-A- 4 027 895
- DE-C- 4 422 416
- DATABASE WPI Section PQ, Week 8238 3.November 1982 Derwent Publications Ltd., London, GB; Class P56, AN M5271 XP002045633 & SU 880 689 A (IVAN REAMING TOOLS) , 15.November 1981
- DATABASE WPI Section PQ, Week 8605 15.Februar 1986 Derwent Publications Ltd., London, GB; Class P56, AN 86-033882 XP002045634 & SU 1 166 965 A (ODESS SPEC TOOLS) , 15.Juli 1985
- S.E. GURYCHEV ET AL: "Metal cutting machine tools - Determining the configuration of a machining centre" SOVIET ENGINEERING RESEARCH. (STANKI I INSTRUMENTY & VESTNIK MASHINOSTROENIA MASHINOSTROCNIE)., Bd. 3, Nr. 2, März 1983, NEW YORK US, Seiten 65-68, XP002045632

## Beschreibung

Die Erfindung betrifft ein Zentrum zur Bearbeitung von Werkstücken mit einem Maschinengestell für ein bewegliches Bearbeitungswerkzeug, einem Bearbeitungstisch für die von Paletten gehaltenen Werkstücke, einem Rüstplatz, mit einer Vorrichtung zum Palettenwechsel, wobei der Tisch über den Paletten angeordnet ist und die Werkstücke bzw. eine Vorrichtung, die das oder die Werkstücke trägt, bei der Bearbeitung in der Bearbeitungsposition von der Palette nach unten ragen und wobei die Vorrichtung zum Palettenwechsel um eine senkrechte Achse verschwenkbar ist.

In der Regel werden in Bearbeitungszentren die Werkstücke auf den Paletten stehend angeordnet und bearbeitet. Die bei der Bearbeitung anfallenden Späne werden durch Öl oder andere flüssige Medien weggespült. Die Paletten und die zugehörigen Einrichtungen behindern aber in der Regel den Spänetransport. Darüber hinaus ist die Befeuchtung der Späne unerwünscht.

Aus dem Dokument EP -A- 0 484 556 ist ein Bearbeitungszentrum gemäß dem Oberbegriff des Anspruchs 1 bekannt, bei dem die auf Paletten angeordneten Werkstücke in hängender Stellung bearbeitet werden. Der Werktisch der Maschine befindet sich oberhalb der Paletten und das bearbeitende Werkzeug unterhalb dieses Werktisches. Diese Anordnung hat den Vorteil, daß die bei der Bearbeitung anfallenden Späne direkt nach unten fallen und auch das zur Bearbeitung notwendige Öl oder andere flüssige Medien nicht die Paletten befeuchten.

Aus dem Dokument SU-A 880 689 ist ein Bearbeitungszentrum bekannt, bei dem die Werkstücke kopfüber an einer Palette hängend bearbeitet werden. Das Schwenken der Palette in die hängende Anordnung der Werkstücke erfolgt erst innerhalb des Bearbeitungszentrums.

Mit der Erfindung soll ein Bearbeitungszentrum geschaffen werden, das die Paletten so aufnimmt, daß diese mit nur einfachen Bewegungen vom Rüstplatz zum Bearbeitungsplatz transportiert werden müssen, wobei eine hohe Bearbeitungsgenauigkeit gewährleistet ist.

Diese Aufgabe wird erfindungsgemäß dadurch gelöst, daß ausgehend von einem Bearbeitungszentrum der eingangs angegebenen Gattung die Vorrichtung zum Palettenwechsel sowie der Bearbeitungstisch und der Rüstplatz an einem oberen Gestellteil des Maschinengestells angeordnet sind, wobei bei der Verschwenkbewegung um die Achse das Werkstück - oder die Vorrichtung, die das oder die Werkstücke trägt, vom Rüstplatz in die Bearbeitungsposition gelangt.

Diese Anordnung ergibt eine hohe Bearbeitungsgenauigkeit und beim Palettenwechsel sind nur einfache Bewegungen notwendig.

In manchen Fällen kann es vorteilhaft sein, Abstrebungen am Maschinengestell vorzusehen, um die jenigen Teile des Maschinengestells, die sich über den Rüstplatz und den Tisch erstrecken, ausreichend zu stabilisieren.

Diese und weitere Merkmale der Erfindung ergeben sich aus der nachfolgenden Beschreibung einiger Ausführungsbeispiele der Erfindung. Diese Ausführungsbeispiele sind in der Zeichnung schematisch dargestellt.

Es zeigen:
- Fig. 1: im wesentlichen eine Seitenansicht der Maschine,
- Fig. 2: ein abgewandeltes Ausführungsbeispiel und

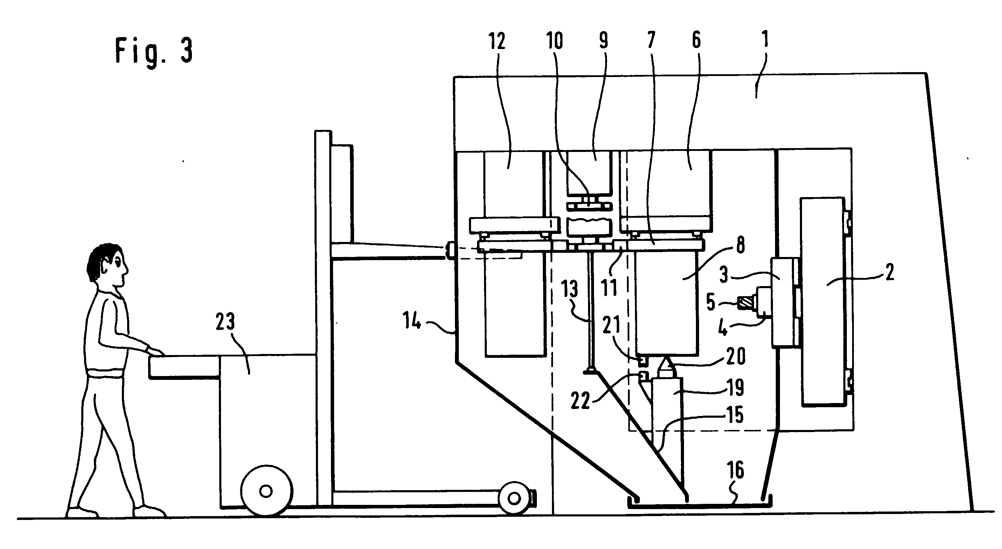

- Fig. 3: eine Maschine gemäß Fig. 1, jedoch mit Zusatzgerät.

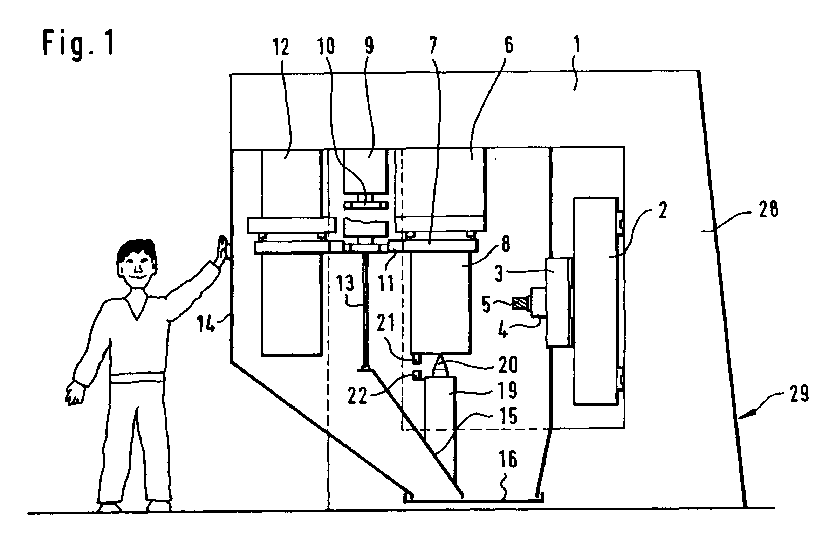

Die Maschine, wie diese beispielsweise in der Fig. 1 gezeigt ist, umfaßt im wesentlichen ein Gestell (29) mit einem Ständer (28), der ein, oberer Gestellteil 1 trägt, der sich über den Bearbeitungsplatz und auch den Rüstplatz 12 erstreckt. Zwischen dem Bearbeitungsplatz, also dem Tisch 6, und dem Rüstplatz 12 ist eine Palettenwechselvorrichtung 9 angeordnet, deren Greifer 10 in der Lage ist, an den Paletten 7 anzugreifen, und zwar mittels der Ankuppelelemente 11, so daß die Palette des Rüstplatzes und die Palette 7 des Bearbeitungstisches um eine Verschwenkachse 13 verschwenkt werden können, wobei die jeweiligen Vorrichtungen 8, die auf den Paletten montiert sind, ihre Position wechseln können. Beim Palettenwechsel werden die Paletten nach Lösung entsprechender Verbindungselemente zum Beispiel nach unten abgehoben, so daß sie aus ihren jeweiligen Befestigungen und Kupplungselementen freikommen. Nach der Verdrehung um die Achse 13 erfolgt wieder ein Anheben und ein Ankoppeln.

In der Bearbeitungsposition wirkt eine Zentrierung 20 mit der Vorrichtung 8 zusammen. Die Kupplungen zwischen der Abstützeinrichtung 19, die auch die Zentrierung 20 trägt, sind mit 21 und 22 bezeichnet. Die Elemente 20, 21 und 22 können auch entfallen oder durch andere geeignete Mittel ersetzt werden.

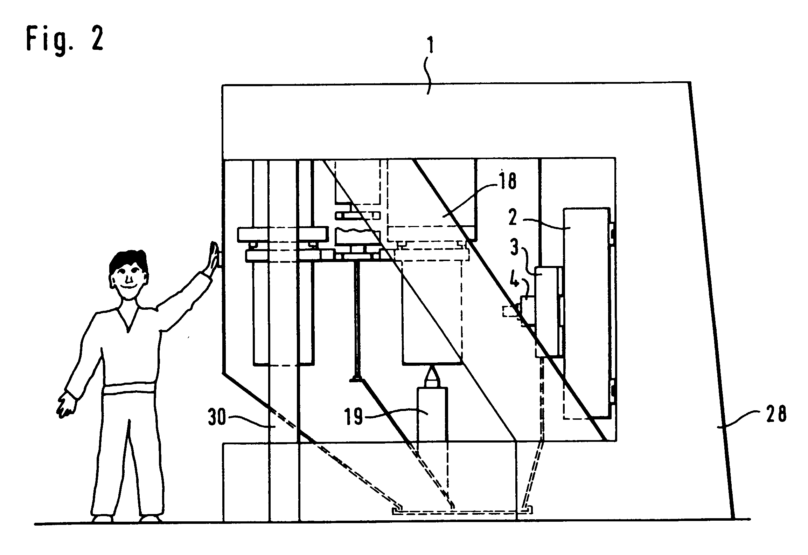

Der Maschinenteil 1 ist, wie insbesondere aus der Fig. 1 hervorgeht, an seinem vorkragenden Ende unterstützt. Es kann auch noch, wie sich aus Fig. 2 ergibt, eine zusätzliche Abstrebung 18 verwendet werden, die die Abstrebung 30 am vorragenden Ende ergänzt.

Das Werkzeug zur Bearbeitung der Werkstücke an der Vorrichtung 8 ist mit 5 bezeichnet. Dieses Werkzeug ist auf dem in senkrechter Richtung verschiebbaren Schlitten 3 gehalten, wobei der Schlitten 2 eine Verschiebbarkeit in der X-Achse zuläßt. Die Pinole 4, die das Werkzeug trägt, ergibt die Beweglichkeit in der Z-Achse.

Mit 15 ist ein Blech bezeichnet, das dazu dient, die Späne in die Wanne 16 zu leiten, von der aus dann der Weitertransport erfolgen kann. Die Wand 14 verschließt während des Wechsels den Rüstplatz.

Bei der Verwirklichung der Erfindung kann darart vorgegangen werden, daß die einzelnen Werkstücke beispielsweise an den Vorrichtungen 8 montiert werden. Es ist aber auch möglich, die Palette des Rüstplatzes mit der zugehörigen Vorrichtung und gegebenenfalls auch den Werkstücken durch eine Hilfsvorrichtung, beispielsweise einen Wagen 23, zu bewegen. Dies ist dann von Bedeutung, wenn zum Beispiel andere Vorrichtungen bzw. Werkstücke zum Einsatz kommen. Ein derartiger Wagen kann eine Ausbildung aufweisen wie ein Gabelstapler. Die Bauweise der Maschine läßt ein Unterfahren des Rüstplatzes zu, so daß beispielsweise bei einem Wechsel der Vorrichtung 8 die entsprechenden mechanischen Mittel eingesetzt werden können.

## Patentansprüche

1. Zentrum zur Bearbeitung von Werkstücken mit einem Maschinengestell (29) für ein bewegliches Bearbeitungswerkzeug (5), einem Bearbeitungstisch (6) für die von Paletten (7) gehaltenen Werkstücke, einem Rüstplatz (12), mit einer Vorrichtung (9) zum Palettenwechsel, wobei der Tisch (6) über den Paletten angeordnet ist und die Werkstücke bzw. eine Vorrichtung (8), die das oder die Werkstücke trägt, bei der Bearbeitung in der Bearbeitungsposition von der Palette (7) nach unten ragen und wobei die Vorrichtung (9) zum Palettenwechsel um eine senkrechte Achse (13) verschwenkbar ist, **dadurch gekennzeichnet, daß** die Vorrichtung (9) zum Palettenwechsel sowie der Bearbeitungstisch (6) und der Rüstplatz (12) an einem oberen Gestellteil (1) des Maschinengestells (29) angeordnet sind, wobei bei der Verschwenkbewegung um die Achse (13) das Werkstück bzw. die Vorrichtung (8), die das oder die Werstücke trägt, vom Rüstplatz (12) in die Bearbeitungsstellung gelangt.

2. Zentrum nach Anspruch 1, **dadurch gekennzeichnet, daß** das Maschinengestell (29) aus einem Ständer (28) und dem von diesem getragenen oberen Gestellteil (1) besteht.

3. Zentrum nach einem der vorhergehenden Ansprüche, **dadurch gekennzeichnet, daß** die Wechselvorrichtung (9) für die Paletten (7) antreibbare Ankuppelelemente (11), insbesondere Palettenfäuste aufweist, die die Paletten (7) formschlüssig ergreifen.

4. Zentrum nach einem der vorhergehenden Ansprüche, **gekennzeichnet durch** eine Abstützeinrichtung (19) mit einer Zentrierung (20) zur Abstützung von unten für die Werkstücke bzw. die die Werkstücke tragenden, von den Paletten (7) gehaltenen Vorrichtungen (8).

5. Zentrum nach einem der vorhergehenden Ansprüche, **dadurch gekennzeichnet, daß** der obere Gestellteil (1) sich über Abstrebungen (18, 30) am unteren Teil des Gestelles (29) abstützt.

6. Zentrum nach Anspruch 5, **dadurch gekennzeichnet, daß** die Abstrebungen (18) mit dem oberen Gestellteil (1) und dem Ständer (28) ein steifes Dreieck bilden.

7. Zentrum nach Anspruch 5 oder 6, **gekennzeichnet durch** zwei Abstrebungen (18, 30), zwischen denen sich die Paletten (7) in der Bearbeitungsstellung befinden.

8. Zentrum nach einem der vorhergehenden Ansprüche, **gekennzeichnet durch** einen Wagen (23) zum Zu- und Abtransport der Paletten (7) zum Rüstplatz (12).

## Claims

1. Centre for machining work pieces with a machine frame (29) for a movable machining tool (5), a machining table (6) for the workpieces held by pallets (7), a preparation area (12), with a device (9) for pallet changing , where the table (6) is positioned above the pallets and the workpieces, respectively a device (8) which carries one or more workpieces projects downward during the machining in the machining position of the pallet (7) and where the device (9) for pallet changing can be swung around a vertical axis (13), characterised in that the device (9) for pallet changing as well as the machining table (6) and the preparation area (12) are arranged at an upper frame part (1) of the machine frame (29), where the workpiece respectively the device (8) carrying one or more workpieces reaches the machining position from the preparation area (12) during the swing movement around the axis (13).

2. Centre according to claim 1, characterised in that the machine frame (29) comprises a stand (28) and the upper frame part (1) carried by the stand.

3. Centre according to one of the preceding claims, characterised in that the change device (9) for the pallets (7) has drivable coupling elements (11) in particular pallet fists which grip and adapt to the shape of pallets (7).

4. Centre according to one of the preceding claims, characterised by a supporting means (19) with a centering device (20) for providing support from below for the workpieces respectively for the devices (8) supporting the workpieces held by the pallets (7).

5. Centre according to one of the preceding claims, characterised in that the upper frame (1) is supported by means of struts (18, 30) at the lower part of the frame (29).

6. Centre according to claim 5 , characterised in that the struts (18) form a rigid triangle together with upper frame part (1) and the stand (28).

7. Centre according to claim 5 or 6, characterised by two struts (18, 30), between which the pallets (7) are situated when in machining position.

8. Centre according to one of the preceding claims, characterised in that a truck (23) is provided in order to convey the pallets (7) to and away from the preparation area (12).

## Revendications

1. Ensemble d'usinage pour le façonnage de pièces à usiner possédant un bâti (29) prévu pour une machine à usiner mobile (5), une table d'usinage (6) supportant des pièces à usiner par des palettes (7) et une zone de préparation (12) avec un dispositif d'échange (9) des palettes; la table (6) étant située au-dessus des palettes, les pièces à usiner et le dispositif (8) les maintenant dépassant de la palette (7) vers le bas lors de l'usinage ou lorsqu'ils sont en position d'usinage et le dispositif (9) permettant l'échange des palettes pivotant autour d'un axe vertical (13), caractérisé en ce que le dispositif d'échange (9) des palettes, la table d'usinage (6) et la zone de préparation (12) sont situées au niveau d'une partie supérieure (1) du bâti (29) de la machine et en ce que la pièce à usiner et le dispositif (8) maintenant la ou les pièces à usiner entrent en position d'usinage en venant de la zone de préparation (12) par un mouvement de pivotement autour de l'axe vertical (13).

2. Ensemble selon la revendication 1 caractérisé en ce que le bâti (29) consiste en un pied (28) et en une partie supérieure de bâti (1) supportée par ce pied.

3. Ensemble selon l'une des revendications précédentes caractérisé en ce que le dispositif d'échange (9) des palettes (7) possède des éléments d'accouplement (11) commandés, en particulier des éléments de forme spécifique permettant de saisir les palettes (7).

4. Ensemble selon l'une des revendications précédentes caractérisé par un dispositif de support (19) possédant un élément de centrage (20) soutenant les pièces à usiner ou les dispositifs (8) maintenant ces pièces; ces dispositifs étant de leur côté maintenus par les palettes (7).

5. Ensemble selon l'une des revendications précédentes caractérisé en ce que la partie supérieure (1) du bâti s'appuie sur la partie inférieure (29) du bâti par des étais (18, 30).

6. Ensemble selon la revendication 5 caractérisé en ce que les étais (18) forment un triangle rigide avec la partie supérieure (1) du bâti et le pied (28).

7. Ensemble selon la revendication 5 ou 6 caractérisé par deux étais (18, 30) entre lesquels sont situées les palettes (7) en position d'usinage.

8. Ensemble selon l'une des revendications précédentes caractérisé par l'existence d'un chariot (23) permettant le transport des palettes (7) vers et de la zone de préparation (12).
